# FASCICULE DE BREVET EUROPEEN

(11) **EP 3 432 221 B1**
(45) Date de publication et mention de la délivrance du brevet: **03.11.2021**
(21) Numéro de dépôt: 18305953.4
(22) Date de dépôt: 13.07.2018
(51) Int. Cl.: G06K 19/07, G06K 19/077

(54) **CARTE ÉLECTRONIQUE COMPRENANT UN CAPTEUR D'EMPREINTE ET PROCÉDÉ DE FABRICATION D'UNE TELLE CARTE**
ELEKTRONISCHE KARTE, DIE EINEN FINGERABDRUCKSENSOR UMFASST, UND HERSTELLUNGSVERFAHREN EINER SOLCHEN KARTE
ELECTRONIC CARD COMPRISING A FINGERPRINT SENSOR AND METHOD OF MANUFACTURING SUCH A CARD

(30) Priorité: 17.07.2017 FR 1756763
(43) Date de publication de la demande: 23.01.2019
(73) Titulaire: Idemia Identity & Security France, 92400 Courbevoie (FR)
(72) Inventeur: POMPEANI, Sylvie, 92130 ISSY LES MOULINEAUX (FR); GERMAIN, François, 92130 ISSY LES MOULINEAUX (FR)
(74) Mandataire: Regimbeau

(56) Documents cités:
- EP-A1- 3 159 832
- US-A1- 2005 139 685
- US-A1- 2006 097 059
- US-A1- 2009 153 297
- SHIGEMATSU S ET AL: "A SINGLE-CHIP FINGERPRINT SENSOR AND IDENTIFIER", IEEE JOURNAL OF SOLID-STATE CIRCUITS, IEEE SERVICE CENTER, PISCATAWAY, NJ, USA, vol. 34, no. 12, 1 décembre 1999 (1999-12-01), pages 1852-1859, XP000861834, ISSN: 0018-9200, DOI: 10.1109/4.808910

## Description

### DOMAINE TECHNIQUE GENERAL

L'invention concerne le domaine des cartes électroniques ainsi que la fabrication de telles cartes et concerne plus particulièrement les cartes électroniques comprenant un capteur d'empreinte.

### ETAT DE LA TECHNIQUE

Des cartes électroniques comprenant un capteur d'empreinte sont connus.

La tendance actuelle est que ces cartes électroniques, avec un capteur d'empreinte, soient aussi flexibles que les cartes à puce habituelles tout en respectant au mieux des contraintes en termes de dimensions. Ces contraintes de flexibilité et de dimensions sont mentionnées dans les standards ISO 781 ID1, ISO 7816 pour les applications bancaires) et ISO 10373.

Un problème est que les capteurs d'empreintes sont fragiles et ne peuvent pas forcément supporter de telles exigences de flexibilité et de dimensions.

Pour tenter de résoudre ce problème, un certain nombre de cartes électroniques ont été envisagées. Ces cartes proposent soit d'augmenter la rigidité de la carte en augmentant l'épaisseur de la carte (voir document WO 2009/140968) soit d'introduire des éléments de renforts dans la carte au niveau du capteur d'empreinte (voir document WO 2017/093514).

Un autre problème avec ces cartes est que le capteur d'empreinte nécessite que certains de ses composants (typiquement le processeur et/ou la mémoire) soient montés au sein d'une couche encastrée (inlay en anglais) entre les deux couches plastiques de la carte.

Ces solutions ne sont toutefois pas satisfaisantes car la carte électronique est complexe à fabriquer et les contraintes de flexibilité et de dimensions du standard ISO 7816 ne sont pas respectées.

La demande de brevet européen EP 3159832 A1 et les demandes de brevets américains US 2009/0153297 A1 et US 2005/ 0139685 A1 décrivent également des cartes comprenant un capteur d'empreintes digitales.

### PRESENTATION DE L'INVENTION

Un but de l'invention est d'avoir une carte électronique comprenant un capteur d'empreinte qui satisfait des contraintes spécifiées dans les standards les standards ISO 781 ID1, ISO 7816 pour les applications bancaires) et ISO 10373 en termes de dimensions et de flexibilité.

Un autre but de l'invention est d'avoir un procédé de fabrication d'une carte électronique comprenant un capteur d'empreinte qui soit simple à mettre en oeuvre.

A cet effet, l'invention propose une carte électronique flexible selon la revendication 1.

Un module d'empreintes affleurant la surface supérieure du corps de carte présente des avantages d'ergonomie, de facilité de fabrication, de résistance et de durée de vie de la carte qu'il équipe par rapport à un module d'empreintes qui serait en saillie ou à l'inverse dans un renfoncement par rapport à la surface supérieure du corps de carte.

En effet, un module d'empreintes qui serait en saillie par rapport à la surface supérieure introduirait des difficultés, voire une impossibilité, d'introduction de la carte dans des terminaux, par exemple dans des distributeurs automatiques de billets.

Par ailleurs, un module d'empreintes qui serait dans un renfoncement par rapport à la surface supérieure fragiliserait la structure de la carte et en compliquerait la fabrication à grande échelle. La durée de vie de la carte serait également réduite par l'accumulation d'impuretés et de poussières dans l'interstice entre la surface supérieure et le module d'empreintes, qui endommageraient à terme le dispositif.

Enfin, un module d'empreintes affleurant la surface supérieure de la carte permet d'optimiser le confort d'un utilisateur positionnant son doigt sur le module d'empreintes, l'utilisateur ne sentant pas une saillie ou un renfoncement sous son doigt lorsqu'il le positionne.

L'invention est avantageusement complétée par les caractéristiques suivantes, prises seules ou en une quelconque de leur combinaison techniquement possible.

Le module d'empreinte comprend en outre des plots de connexion destinés à connecter ledit module d'empreinte à une antenne ou à un deuxième module.

La cavité présente une profondeur maximale telle que la distance entre la surface inférieure du corps de carte et le fond de la cavité est supérieur ou égal à 160 µm.

La cavité présente un profil interne tridimensionnel de manière à suivre le relief interne du module d'empreinte, la cavité comprenant au moins une butée configurée pour limiter les déformations du module logé dans la cavité.

La carte comprend deux cavités, une cavité logeant le module d'empreinte, l'autre cavité logeant un deuxième module typiquement bancaire ou d'accès.

Le corps de carte comprend une couche intermédiaire, dite d'interconnexion, en matériau conducteur sur laquelle une antenne est intégrée.

Le corps de carte comprend une couche intermédiaire, dite d'interconnexion, en matériau semi-conducteur sur laquelle un circuit, configuré pour connecter le module d'empreinte au deuxième module.

La carte comprend des évidements formés depuis l'au moins une cavité vers la couche d'interconnexion.

Le corps de carte comprend depuis la surface supérieure vers la surface inférieure les couches suivantes laminées :
- une couche supérieure de protection transparente ;
- un premier substrat en PVC ;
- la couche intermédiaire dite d'interconnexion ;
- un second substrat en PVC ;
- une couche inférieure de protection transparente.

La carte comprend en outre une marque tactile et/ou une marque d'alignement disposée(s) sur la surface supérieure du corps de carte à proximité du module d'empreinte, ladite marque tactile étant configurée pour permettre un positionnement correct d'un doigt sur le module d'empreinte.

Selon un deuxième aspect, l'invention concerne également un procédé de fabrication d'une carte électronique selon la revendication 11.

L'étape d'obtention du corps de carte comprend une sous-étape d'intégration d'une antenne sur la couche intermédiaire.

Le procédé comprend en outre l'obtention de deux cavités dans le corps de carte, et le placement du module d'empreinte dans une des deux cavités et le placement d'un deuxième module dans l'autre cavité, l'étape d'obtention du corps de carte comprend en outre une étape d'intégration d'un circuit de connexion configuré pour connecter le module d'empreinte au deuxième module.

L'étape d'obtention du corps de carte comprend une sous-étape de lamination à chaud de la couche supérieure, du premier substrat, de la couche intermédiaire et de la couche inférieure.

Le procédé comprend une étape d'obtention d'au moins un évidement dans le corps de carte depuis la cavité vers la couche intermédiaire.

Avec la carte selon l'invention, la totalité du module d'empreinte est logée dans une même cavité. Il n'y a donc pas besoin de prévoir de connexion ou cavité supplémentaire pour permettre de loger ce module.

Le module d'empreinte peut venir facilement s'intégrer dans une carte électronique classique.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- les figures 1a et 1b illustrent respectivement une vue de dessus et une vue de profil d'une carte électronique selon un mode de réalisation de l'invention ;
- la figure 2 illustre une vue de profil d'un module d'empreinte d'une carte électronique selon un mode de réalisation de l'invention ;
- la figure 3 illustre une vue de profil d'un module d'empreinte, d'une carte électronique selon un mode de réalisation de l'invention, soumis à une déformation introduite par un doigt d'un utilisateur ;
- la figure 4 illustre une vue de profil d'un module d'empreinte dans une cavité tridimensionnelle d'une carte électronique selon un mode de réalisation de l'invention ;
- la figure 5 illustre une vue de profil d'un corps de carte d'une carte électronique selon un mode de réalisation de l'invention ;
- la figure 6 illustre une vue de dessus d'une carte électronique comprenant une marque tactile selon un mode de réalisation de l'invention ;
- la figure 7 illustre une vue de profil d'une carte électronique selon un mode de réalisation de l'invention pour une application capteur d'empreinte ;
- la figure 8 illustre une vue de profil d'une carte électronique selon un mode de réalisation pour une application capteur d'empreinte couplée avec une autre application ;
- la figure 9 illustre une vue de dessus d'une couche d'interconnexion de la carte électronique de la figure 8 ;
   la figure 10 illustre des étapes d'un procédé de fabrication d'une carte électronique selon l'invention.

Sur l'ensemble des figures les éléments similaires portent des références identiques.

### DESCRIPTION DETAILLEE DE L'INVENTION

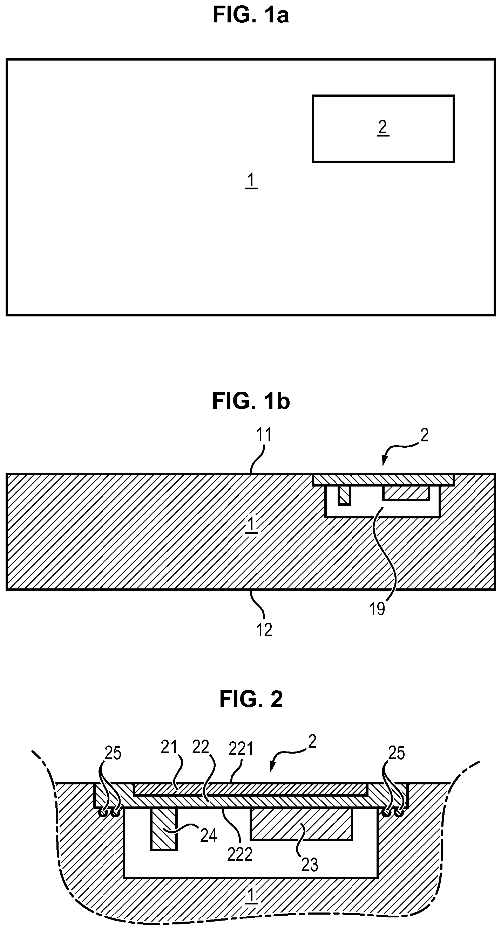

Les **figures 1a** et **1b** illustrent une carte électronique comprenant un corps 1 de carte et un module 2 d'empreinte.

Le corps 1 de carte comprend une surface supérieure 11 et une surface inférieure 12 et présente des dimensions conformes au standard ISO 781 ID1 En particulier, le corps 1 de carte présente une épaisseur comprise entre 780 et 840 µm.

En outre, le corps de carte comprend plusieurs couches assemblées entre elles au moyen d'un procédé de lamination à chaud de manière à satisfaire les contraintes de tenue des couches entre elles du standard ISO 781 ID1.

La carte électronique comprend un module 2 d'empreinte logé dans une cavité 19 formée dans l'épaisseur du corps 1 de carte. La cavité 19 débouche de la surface supérieure 11 du corps 1 de carte et affleure la surface supérieure du corps de carte. La cavité 19 est avantageusement obtenue par fraisage du corps 1 de carte sur une épaisseur souhaitée.

Le module 2 d'empreinte est configuré pour acquérir l'image d'une empreinte d'un utilisateur et pour vérifier l'identité du porteur de la carte électronique.

Le module 2 comprend un substrat 22 semi-conducteur et flexible typiquement en matière polymère et époxy afin d'être compatible avec les contraintes de flexibilité du standard cité tout en étant suffisamment solide.

Une partie de ce substrat 22 constitue la partie active 21 du module sur laquelle le porteur va poser son doigt pour que l'image de son empreinte soit acquise.

Le reste du substrat 22 permet l'assemblage du module 2 d'empreinte sur la carte et de support pour l'assemblage d'un microcontrôleur 23 (configuré pour comparer une empreinte fraichement acquise à une empreinte de référence) et éventuellement d'une mémoire 24 (qui peut comprendre une empreinte de référence de l'utilisateur préalablement stockée).

Ainsi, le microcontrôleur est configuré pour mettre en oeuvre l'acquisition de l'empreinte ainsi que les traitements de ladite empreinte. En particulier, l'image de l'empreinte est capturée par la partie active puis traitée par le microcontrôleur de façon à extraire un modèle qui servira à la comparaison avec l'image que le porteur aura enregistré dans la carte lors d'une phase précédente d'enrôlement.

Le module d'empreinte comprend donc un substrat 2 comprenant une face active 221 et une face de connexion 222 opposée à la face active 221. La face active 221 est la partie du module d'empreinte qui affleure la surface supérieure du corps 1 de carte et qui comprend la partie active 21.

Par exemple, pour un module 2 d'empreintes d'une épaisseur de 600 micromètres, la face active 221 peut affleurer la surface supérieure 11 du corps 1 de carte avec une tolérance d'environ 100 micromètres, de préférence d'environ 50 micromètres.

Une telle tolérance permet de respecter les contraintes d'introduction de la carte avec son module 2 dans un terminal de type distributeur automatique de billets, alors qu'un module 2 d'empreintes qui serait plus surélevé par rapport à la surface supérieure 11 conduirait à des difficultés, voire une impossibilité, d'introduction de la carte.

Une telle tolérance permet également d'aboutir à une résistance structurelle et à une facilité de fabrication satisfaisantes de la carte, alors qu'un module 2 d'empreintes positionné plus bas dans l'épaisseur de la carte en fragiliserait la structure et en compliquerait la fabrication à grande échelle.

Par ailleurs, la durée de vie d'une carte dont le module 2 serait situé plus bas dans l'épaisseur de la carte serait également réduite par l'accumulation d'impuretés et de poussières dans l'interstice entre la surface supérieure 11 et le module 2 d'empreintes, ce qui endommageraient à terme le dispositif.

Enfin, un module 2 d'empreintes qui serait situé dans un renfoncement par rapport à la surface supérieure 11 pourrait conduire à une sensation désagréable de contrainte pour un utilisateur plaçant son doigt sur la face active 221 renfoncée. Par conséquent, un module 2 affleurant la surface supérieure 11 de la carte sera plus facilement adopté par les utilisateurs.

De manière avantageuse, le microcontrôleur 23 est éventuellement la mémoire sont assemblés au substrat 2 typiquement par collage à froid anisotropique ou refusion au niveau de la face de connexion 222.

La face de connexion 222 est la partie du module d'empreinte qui est dans la cavité 13 formée dans le corps 1 de carte et comprend des plots 25 de connexions qui permettent la connexion du module d'empreinte à une antenne ou bien à un autre module. Nous y reviendrons.

On note que sur la figure 2 quatre plots de connexions sont illustrés. Toutefois, un nombre différent peut être prévu en fonction des connexions requises.

Ces plots 25 de connexion sont disposés autour du substrat 2 de façon à perdre le moins de place possible pour la partie active 21 et le montage des composants. Néanmoins, aucune ligne de connexion et aucun composant ne doivent se trouver à moins de 0,3 mm de ces plots de façon à garantir le bon montage du module sur la carte. De plus, un renforcement sur le contour du substrat est avantageusement prévu pour éviter une trop grande flexibilité sur cette partie servant à l'assemblage. Ce renforcement peut être une couronne de matériau conducteur interne au substrat.

La hauteur maximale du substrat et des composants doit être de 600 µm de façon à pouvoir être intégré dans la carte sans dommage et en garantissant une toile de fond suffisante pour la mise en conformité avec les exigences de flexibilité et de robustesse du standard ISO 781 ID1.

Comme déjà mentionné, le substrat 22 de module 2 d'empreinte est flexible. Aussi, pour éviter que le substrat 22, sous l'effet des déformations générés par le doigt de l'utilisateur, ne se détériore, une fois assemblé dans la carte, on prévoit avantageusement une cavité 19 présentant un profil interne tridimensionnel en ce qu'il épouse sensiblement le profil des éléments connectés faisant saillie de la face 212 de connexion du substrat 22 du module 2 d'empreinte.

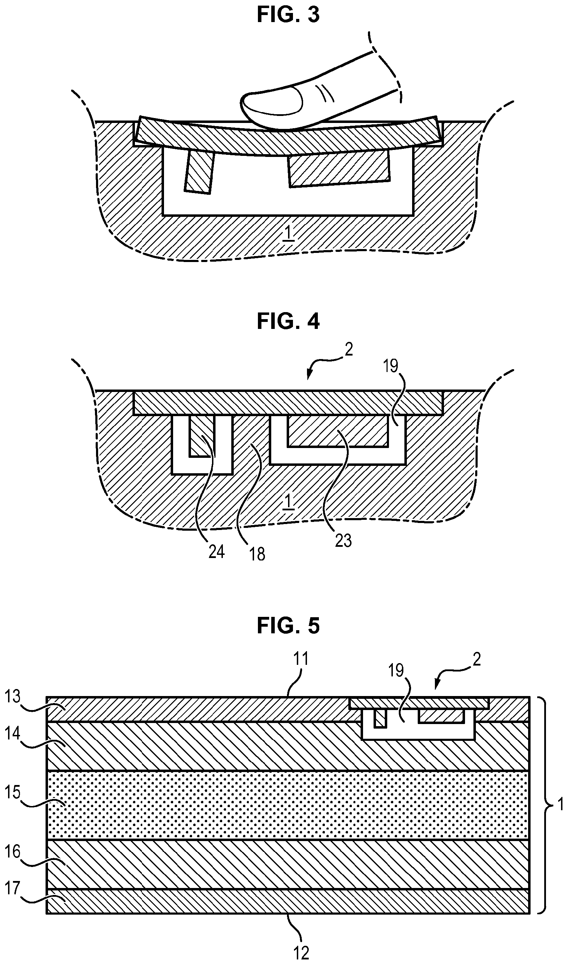

Sur la **figure 2**, la cavité est dite « standard » sans profil particulier. Sur la **figure 3**, on montre une cavité avec le module d'empreinte se déformant lorsqu'un doigt d'un utilisateur est posé sur la partie active du module d'empreinte et sur la **figure 4** on montre une cavité présentant un profil tridimensionnel.

Les composants 23, 24 sont directement montés au-dessous du substrat 2 sur la face de connexion et participent à la limitation des déformations. De plus, le profil interne tridimensionnel de la cavité épousant sensiblement la forme du module 2 d'empreinte, cela permet d'avoir une ou plusieurs butée(s) 18 qui permettront de limiter les déformations du substrat 22 du module 2 d'empreinte.
En relation avec la **figure 5**, le corps de carte comprend l'empilement suivant depuis la surface supérieure 11 du corps de carte vers la surface inférieure 12 du corps 1 de carte :
- une couche 13 supérieure de protection transparente en matière plastique ;
- un premier substrat 14 en matière plastique ;
- une couche 15 intermédiaire comprenant un matériau conducteur à base de cuivre ;
- un second substrat 16 en matière plastique ;
- une couche 17 inférieure de protection transparente en matière plastique. Les couches en plastique sont par exemple en PVC ou PC ou PET.

Les couches en plastiques sont prévues pour supporter d'éventuelles inscriptions (visuel client, décorations diverses, identité, etc.) et les couches de protection sont prévues pour protéger les couches plastiques et recevoir des informations de personnalisation du porteur de la carte.

La couche 15 intermédiaire est prévue pour supporter d'éventuelles pistes conductrices pour connecter le module d'empreinte à une antenne ou bien à un autre module. Cet aspect sera détaillé ultérieurement.

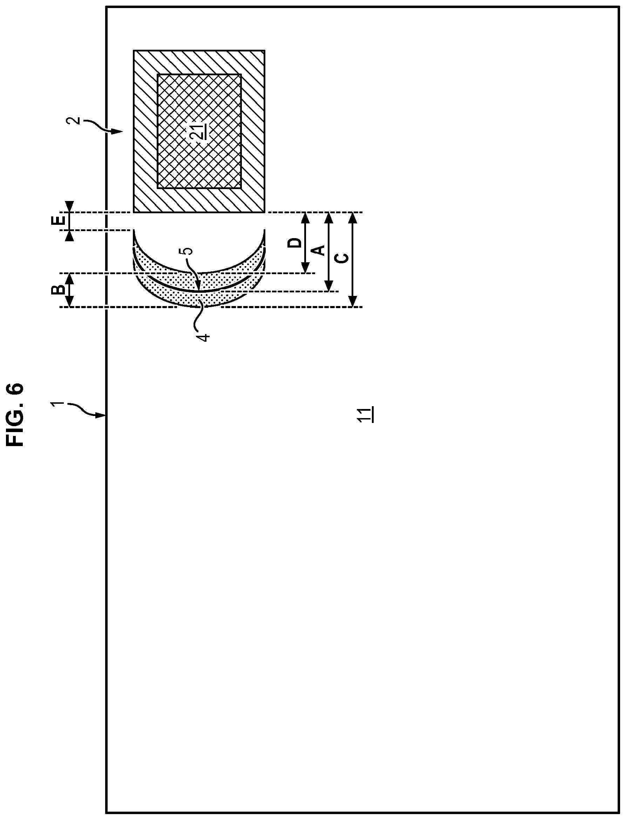

De manière avantageuse, en relation avec la **figure 6**, sur la face 11 supérieure du corps de carte, la couche 13 supérieure de protection transparente comprend une marque 4 tactile qui est ajoutée au moyen de l'impression d'un vernis tactile, ou par gravure de la couche 13 supérieure de protection transparente. Cette marque tactile est mise en place au voisinage proche du capteur 21 d'empreinte (et donc du module 2 d'empreinte) de manière à guider l'utilisateur lorsqu'il pose son doigt sur le capteur 21 d'empreinte. La marque 4 tactile permet de faciliter l'acquisition de l'empreinte.

En particulier, la marque 4 tactile est telle que lorsqu'un utilisateur pose son doigt, l'empreinte à acquérir est correctement positionnée sur le capteur 21 d'empreinte.

La marque 4 tactile est avantageusement imprimée par sérigraphie d'un vernis tactile ou gravée lors de la lamination des couches entre elles (par l'intermédiaire de plaques gravées) ou encore gravée par Laser. Elle présente une épaisseur maximale de 50 µm afin d'être compatible avec les contraintes de taille du standard ISO 781 ID1.

Pour un module d'empreinte rectangulaire ayant une largeur entre 15 mm et 18 mm, la marque tactile est située à un distance maximale de 8-12 mm de la partie active, de préférence 10 mm.

La forme de la marque tactile est de préférence en forme de demi-lune (voir la figure 6). D'autres formes sont envisageables.

Cette marque 4 tactile présente un motif dont la rugosité est différente de celle de la surface supportant la marque.

De manière alternative ou complémentaire, une marque 5 d'alignement permettant, le cas échéant, d'indiquer à l'utilisateur où positionner son doigt sur le corps de carte est imprimée sur le premier substrat 14 et protégé par la couche 13 supérieure de protection transparente. La marque 5 d'alignement est typiquement une portion de cercle représentant l'extrémité d'un doigt.

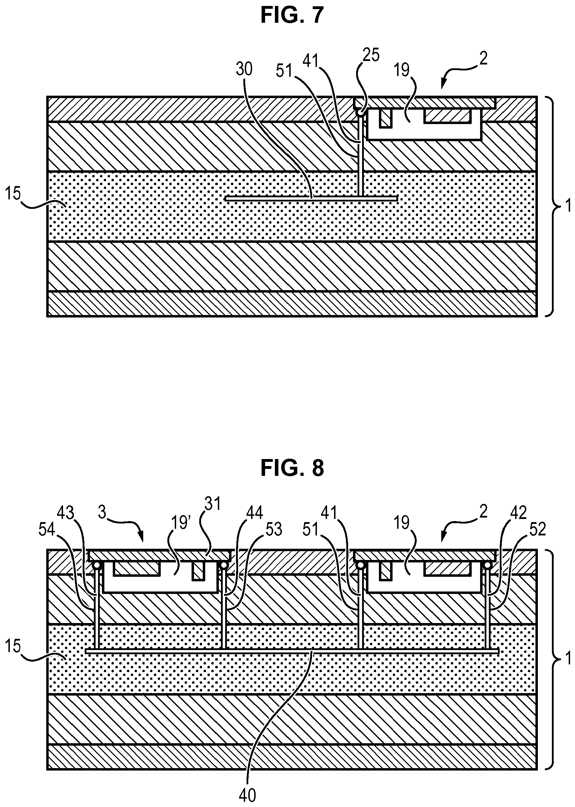

Selon un mode de réalisation, illustré sur la **figure 7**, la carte électronique est utilisée à des fins de fonctionnement par interface sans contact (par radiofréquence à courte ou moyenne portée via une antenne). L'authentification du porteur et la validation de son identité pourra déclencher, par sans contact, un accès, un paiement ou autre. L'alimentation de la carte se fait via un terminal sans contact qui communique avec la carte. Ce terminal suivant les applications est un lecteur d'accès, un terminal de paiement ou autre.

A ce titre, on prévoit une antenne 30 connectée au module 2 d'empreinte. L'antenne 30 est placée sur la couche intermédiaire et laminée dans le corps 1 de carte. Au moins un plot 25 de connexion est alors connecté à l'antenne 30 par un processus de connexion électrique via une résine conductrice ou autre. Pour permettre la connexion du module 2 d'empreinte à l'antenne 30 on prévoit au moins une cavité 41 ménagée dans le corps 1 de carte qui est remplie par exemple de résine 51 conductrice ou autre.

Selon un fonctionnement dit « sans contact », un terminal sans contact communique avec la carte et contient une antenne. Ce terminal est alimenté et grâce au passage d'un courant alternatif dans son antenne, le terminal génère un champ magnétique alternatif. Grâce à son antenne, la carte à proximité de ce champ alternatif peut extraire son énergie. En outre, le courant alternatif du terminal est modulé à deux fréquences différentes ce qui permet de transmettre les données en même temps que l'énergie. Ainsi, recevant son énergie, la carte va démoduler le signal et retrouver en même temps les données modulées et transmises par le terminal.

On a décrit un fonctionnement sans contact mais la carte ici décrite s'applique à des fonctionnements autres, tels que :
- avec contact (via un module d'interface classique conforme au standard ISO 7816-2) ;
- ou « dual » c'est-à-dire avec les deux moyens d'alimentation (contact ou non) ;

Le protocole de communication entre terminal et carte est standardisé de façon à garantir l'interopérabilité. De tels standards sont par exemples les standards ISO 14443 et ISO 15693.

En relation avec la **figure 8**, la carte électronique comprend, outre un module 2 d'empreinte, un deuxième module 3 comprenant une puce configurée pour opérer des fonctions par ailleurs connues de l'homme du métier telles qu'une fonction de contrôle d'accès à un lieu et/ou un réseau de transport et/ou une fonction d'identification régalienne d'individus et/ou une fonction de paiement.

Selon ce mode réalisation, l'authentification du porteur de la carte et la validation de son identité pourra déclencher, par mode contact ou sans contact, un accès, un paiement ou autre.

Toujours en relation avec la figure 8, la carte comprend donc un deuxième module 3 logé dans une cavité 19' dédiée.

Le deuxième module 3 est connecté au module 2 d'empreinte via un circuit 40 placé sur la couche intermédiaire. Le module 3 comprend un microcontrôleur (puce) 31.

Le module 2 d'empreinte et le deuxième module 3 sont connectés au circuit via des évidements 41, 42, 43, 44 ménagées dans le corps et remplis par exemple de résine 51 conductrice ou autre. Sur la figure 8, quatre évidements sont illustrés mais on comprendra qu'il y a autant d'évidements que nécessaires.

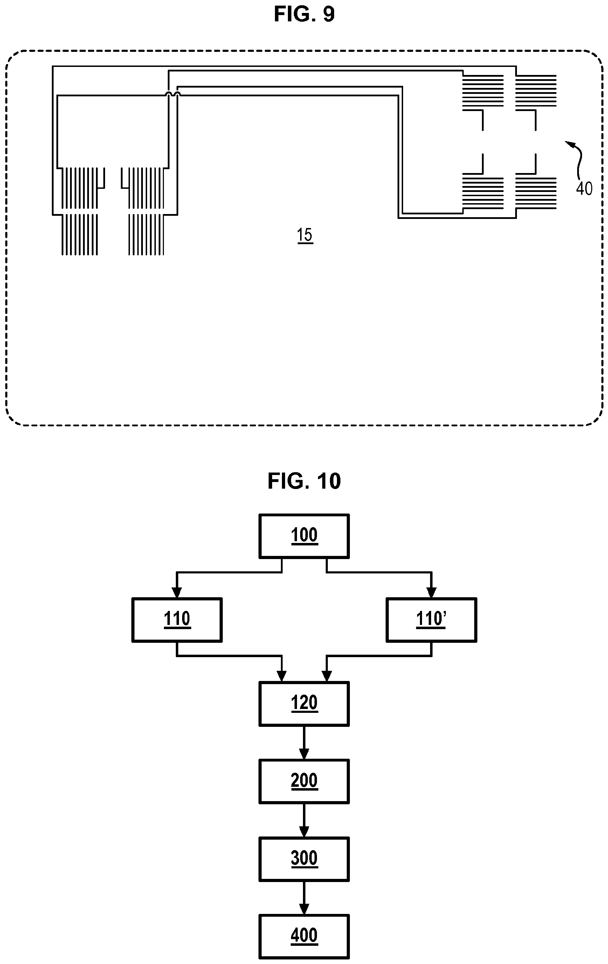

La **figure 9** illustre une vue détaillée de la couche d'interconnexion de la carte électronique de la figure 8.

Sur cette figure, on voit quatre connexions pour connecter le module 2 d'empreinte au module 3 de paiement. Bien entendu, le nombre et la disposition des connexions pourront varier en fonction du type de circuit de connexion.

De manière complémentaire, le deuxième module 3 peut s'interfacer suivant les modes contact et sans contact (on parle de fonctionnement en mode DUAL). Dès que le mode sans contact est nécessaire, une antenne (non représentée en figure 8), est placée sur la couche d'interconnexion ou est ajoutée directement au deuxième module 3.

La carte électronique ci-dessus décrite est avantageusement fabriquée au moyen d'un procédé décrit en relation avec la **figure 10****.**

Le procédé de fabrication comprend essentiellement les étapes suivantes :
- obtention 100 d'un corps de carte ;
- formation 300 d'au moins une cavité 19, 19' dans le corps 1 de carte ;
- placement 400 du module 2 d'empreinte dans la cavité.

Selon l'application de la carte électronique, l'obtention du corps 1 de carte comprend :
- une sous-étape 110 d'intégration d'une antenne 30 sur la couche intermédiaire ; et/ou
- une sous-étape 110' d'intégration d'un circuit de connexion permettant de connecter le module d'empreinte au deuxième module 3.

L'intégration de l'antenne et/ou du circuit de connexion est mise en oeuvre au moyen d'une couche spécifique assemblée avec les autres couches du corps de carte.

De manière avantageuse, le corps 1 de carte est obtenu (étape 120) au moyen d'un procédé de lamination des différentes couches constituant le corps 1 de carte : couches de protection, couches sur lesquelles est imprimé le visuel de la carte incluant la marque d'alignement et la couche intérieure d'inter connexion pouvant porter l'antenne pour un mode de fonctionnement dit sans contact ou DUAL.

Les paramètres de ce procédé sont dépendants des matériaux utilisés mais et peuvent varier de températures inférieures à 100°C pendant quelques secondes à des températures de plus de 180°C pendant 20 minutes à des pressions différentes. Le but de l'opération est d'obtenir une structure homogène avec une adhésion des différentes couches entre elles conforme au standard ISO 781 ID1. Pendant ce procédé, la marque tactile peut être générée en utilisant des plaques de lamination préalablement gravées.

Si ce n'est pas le cas pendant la lamination, de manière complémentaire, une étape d'impression de la marque tactile est mise en oeuvre. Les couches laminées entre elles sont alors imprimées à l'aide d'un vernis tactile. Le procédé utilisé est celui de la sérigraphie afin d'obtenir une épaisseur suffisante pour un obtenir un toucher tout en restant dans une épaisseur conforme au standard (50 µm). Suivant le visuel imprimé sur la carte, on peut aussi envisager d'ajouter cette marque tactile par gravure à l'aide d'un laser. Les visuels sombres seront préférés aux visuels clairs pour utiliser cette technologie marquant la matière de traces sombres.

En outre, avant de placer le ou les modules dans les cavités formées, le procédé comprend une étape 200 d'obtention d'au moins un évidement dans le corps de carte depuis la cavité vers la couche intermédiaire. Le ou les évidements permettent d'effectuer les connexions nécessaires du ou des module(s) à la couche d'interconnexion.

## Revendications

1. Carte électronique flexible comprenant :
- un corps (1) de carte comprenant une surface (11) supérieure et une surface (12) inférieure ;
- au moins une cavité (19, 19') formée dans le corps de carte débouchant de la surface supérieure ;
- un module (2) d'empreinte configuré pour acquérir une empreinte digitale d'un utilisateur, le module d'empreinte étant logé dans la cavité (19) et affleure la surface supérieure du corps de carte ;
**caractérisée en ce que**
le module (2) d'empreinte comprend substrat flexible (22) comprenant un microcontrôleur (23) disposé au-dessous du substrat et une partie active (21) dite de capture sur laquelle l'utilisateur va poser son doigt pour que l'image de son empreinte soit acquise, la dite partie active affleurant la surface supérieure du corps de carte.

2. Carte électronique selon la revendication 1, dans laquelle le module (2) d'empreinte comprend en outre des plots de connexion destinés à connecter ledit module d'empreinte à une antenne (30) ou à un deuxième module (3).

3. Carte électronique selon l'une des revendications précédentes, dans laquelle la cavité (19, 19') présente une profondeur maximale telle que la distance entre la surface inférieure du corps de carte et le fond de la cavité est supérieur ou égal à 160 µm.

4. Carte électronique selon l'une des revendications précédentes, dans laquelle la cavité (19, 19') présente un profil interne tridimensionnel de manière à suivre le relief interne du module (2) d'empreinte, la cavité comprenant au moins une butée configurée pour limiter les déformations du module logé dans la cavité.

5. Carte électronique selon l'une des revendications précédentes, comprenant deux cavités (19, 19'), une cavité logeant le module d'empreinte, l'autre cavité logeant un deuxième module (3) typiquement bancaire ou d'accès.

6. Carte électronique selon l'une des revendications précédentes, dans laquelle le corps (1) de carte comprend une couche intermédiaire, dite d'interconnexion, en matériau conducteur sur laquelle une antenne est intégrée.

7. Carte électronique selon la revendication 5, dans laquelle le corps (1) de carte comprend une couche intermédiaire, dite d'interconnexion, en matériau semi-conducteur sur laquelle un circuit, configuré pour connecter le module d'empreinte au deuxième module (3)

8. Carte électronique selon la revendication précédente, comprenant des évidements formés depuis l'au moins une cavité vers la couche d'interconnexion.

9. Carte électronique selon l'une des revendications 1 à 8, dans laquelle le corps de carte comprend depuis la surface supérieure vers la surface inférieure les couches suivantes laminées :
- une couche (13) supérieure de protection transparente ;
- un premier substrat (14) en PVC ;
- la couche (15) intermédiaire dite d'interconnexion ;
- un second substrat (16) en PVC ;
- une couche (17) inférieure de protection transparente.

10. Carte électronique selon l'une des revendications précédentes, comprenant en outre une marque (4) tactile et/ou une marque (5) d'alignement disposée(s) sur la surface supérieure du corps de carte à proximité du module (2) d'empreinte, ladite marque tactile étant configurée pour permettre un positionnement correct d'un doigt sur le module (2) d'empreinte.

11. Procédé de fabrication d'une carte électronique selon l'une des revendications précédentes, comprenant des étapes de
- obtention (100) d'un corps de carte comprenant une surface supérieure et une surface inférieure;
- formation (300) d'au moins une cavité (19, 19') dans ledit corps de carte débouchant de la surface supérieure;
- placement (400) d'un module (2) d'empreinte dans la cavité, le module d'empreinte affleure la surface supérieure du corps de carte;
le module (2) d'empreinte comprenant un substrat flexible (22) comprenant une partie active (21) dite de capture affleurant la surface supérieure du corps de carte et un microcontrôleur (23) disposé au-dessous du substrat.

12. Procédé de fabrication selon la revendication 11, dans lequel l'étape d'obtention du corps de carte comprend une sous-étape (110) d'intégration d'une antenne sur la couche (15) intermédiaire.

13. Procédé de fabrication selon l'une des revendications 11 à 12, comprenant l'obtention (200) de deux cavités dans le corps (1) de carte, et le placement (400) du module d'empreinte dans une des deux cavités et le placement d'un deuxième module (3) dans l'autre cavité, l'étape d'obtention (100) du corps (1) de carte comprend en outre une étape d'intégration (110') d'un circuit (40) de connexion configuré pour connecter le module (2) d'empreinte au deuxième module (3).

14. Procédé de fabrication selon l'une des revendications 11 à 13, dans lequel l'étape (100) d'obtention du corps (1) de carte comprend une sous-étape (110) de lamination à chaud de la couche (13) supérieure, du premier substrat (14), de la couche (15) intermédiaire et de la couche (17) inférieure.

15. Procédé de fabrication selon l'une des revendications 11 à 14, comprenant une étape (200) d'obtention d'au moins un évidement dans le corps de carte depuis la cavité vers la couche intermédiaire.

## Patentansprüche

1. Biegsame elektronische Karte, umfassend:
- einen Kartenkörper (1), umfassend eine obere Oberfläche (11) und eine untere Oberfläche (12);
- wenigstens eine Ausnehmung (19, 19'), die in dem Kartenkörper gebildet ist und auf die obere Oberfläche mündet;
- ein Fingerabdruckmodul (2), das ausgestaltet ist, um einen Fingerabdruck eines Nutzers zu erfassen, wobei das Fingerabdruckmodul in der Ausnehmung aufgenommen ist und bündig mit der oberen Oberfläche des Kartenkörpers anliegt;
**dadurch gekennzeichnet, dass** das Fingerabdruckmodul (2) ein biegsames Substrat (22), umfassend einen Mikrokontroller (23), der unterhalb des Substrats angeordnet ist, und einen aktiven Teil (21), bezeichnet als Erfassungsteil, auf dem der Nutzer seinen Finger auflegen wird, damit das Bild seines Fingerabdrucks erfasst wird, umfasst, wobei der als aktiv bezeichnete Teil bündig mit der oberen Oberfläche des Kartenkörpers anliegt.

2. Elektronische Karte gemäß Anspruch 1, bei der das Fingerabdruckmodul (2) darüber hinaus Anschlussplots umfasst; die zum Anschließen des genannten Fingerabdruckmoduls an eine Antenne (30) oder an ein zweites Modul (3) bestimmt sind.

3. Elektronische Karte gemäß einem der voranstehenden Ansprüche, bei der die Ausnehmung (19, 19') eine maximale Tiefe derart aufweist, dass die Entfernung zwischen der unteren Oberfläche des Kartenkörpers und dem Boden der Ausnehmung größer als oder gleich 160 µm ist.

4. Elektronische Karte gemäß einem der voranstehenden Ansprüche, bei der die Ausnehmung (19, 19') ein internes dreidimensionales Profil derart aufweist, dass es dem internen Relief des Fingerabdruckmoduls (2) folgt, wobei die Ausnehmung wenigstens einen Anschlag aufweist, um die Verformungen des in der Ausnehmung untergebrachten Moduls zu begrenzen.

5. Elektronische Karte gemäß einem der voranstehenden Ansprüche, umfassend zwei Ausnehmungen (19, 19'), wobei eine Ausnehmung das Fingerabdruckmodul aufnimmt, wobei die andere Ausnehmung ein zweites, typischerweise Banken- oder Zugangsmodul (3) aufnimmt.

6. Elektronische Karte gemäß einem der voranstehenden Ansprüche, bei der der Kartenkörper (1) eine Zwischenschicht, bezeichnet als Verbundschicht, aus leitendem Material umfasst, auf der eine Antenne eingebaut ist.

7. Elektronische Karte gemäß Anspruch 5, bei der der Kartenkörper (1) eine Zwischenschicht, bezeichnet als Verbundschicht, aus Halbleitermaterial umfasst, auf der eine Schaltung zum Anschließen des Fingerabdruckmoduls an das zweite Modul (3) ausgestaltet ist.

8. Elektronische Karte gemäß dem voranstehenden Anspruch, umfassend Vertiefungen, die von wenigstens einer Ausnehmung aus zu der Verbundschicht gebildet sind.

9. Elektronische Karte gemäß einem der Ansprüche 1 bis 8, bei der der Kartenkörper von der oberen Oberfläche bis zur unteren Oberfläche die folgenden laminierten Schichten umfasst:
- eine obere, durchsichtige Schutzschicht (13);
- ein erstes Substrat (14) aus PVC;
- die als Verbundschicht bezeichnete Zwischenschicht (15)
- ein zweites Substrat (16) aus PVC
- eine untere durchsichtige Schutzschicht (17).

10. Elektronische Karte gemäß einem der voranstehenden Ansprüche, umfassend darüber hinaus eine berührungssensitive Markierung (4) und/oder eine Ausrichtungsmarkierung (5), die auf der oberen Oberfläche des Kartenkörpers in der Nähe des Fingerabdruckmoduls (2) angeordnet ist/sind, wobei die genannte berührungssensitive Markierung ausgestaltet ist, um eine ordnungsgemäße Positionierung eines Fingers auf dem Fingerabdruckmodul (2) zu ermöglichen.

11. Herstellungsverfahren einer elektronischen Karte gemäß einem der voranstehenden Ansprüche, umfassend Schritte zum
- Erhalten (100) eines Kartenkörpers, umfassend eine obere Oberfläche und eine untere Oberfläche;
- Bilden (300) wenigstens einer Ausnehmung (19, 19') in dem genannten Kartenkörper, die von der oberen Oberfläche aus mündet;
- Einsetzen (400) eines Fingerabdruckmoduls (2) in die Ausnehmung, das Fingerabdruckmodul liegt bündig mit der oberen Oberfläche des Kartenkörpers an; wobei das Fingerabdruckmodul (2) ein biegsames Substrat (22) umfasst, umfassend einen aktiven Teil (21), bezeichnet als Erfassung, der bündig mit der oberen Oberfläche des Kartenkörpers anliegt, und einen Mikrokontroller (23), der unterhalb des Substrats angeordnet ist.

12. Herstellungsverfahren gemäß Anspruch 11, bei dem der Schritt des Erhaltens des Kartenkörpers einen Teilschritt (110) einer Integration einer Antenne auf der Zwischenschicht (15) umfasst.

13. Herstellungsverfahren gemäß einem der Ansprüche 11 bis 12, umfassend das Erhalten (200) von zwei Ausnehmungen in dem Kartenkörper (1) und das Einsetzen (400) des Fingerabdruckmoduls in eine der zwei Ausnehmungen und das Einsetzen eines zweiten Moduls (3) in die andere Ausnehmung, der genannte Schritt zum Erhalten (100) des Kartenkörpers (1) umfasst darüber hinaus einen Einbauschritt (110') einer Anschlussschaltung (40), die zum Anschließen des Fingerabdruckmoduls (2) an das zweite Modul (3) ausgestaltet ist.

14. Herstellungsverfahren gemäß einem der Ansprüche 11 bis 13, bei dem der Schritt (100) zum Erhalten des Kartenkörpers (1) einen Teilschritt (110) zum Heißlaminieren der oberen Schicht (13), des ersten Substrats (14), der Zwischenschicht (15) und der unteren Schicht (17) umfasst.

15. Herstellungsverfahren gemäß einem der Ansprüche 11 bis 14, umfassend einen Schritt (200) zum Erhalten wenigstens einer Vertiefung in dem Kartenkörper von der Ausnehmung zur Zwischenschicht.

## Claims

1. Flexible electronic card comprising:
- a card body (1) comprising an upper surface (11) and a lower surface (12);
- at least one cavity (19, 19') formed in the card body emerging from the upper surface;
- a fingerprint module (2) configured to acquire a fingerprint of a user, the fingerprint module being housed in the cavity (19) and flush with the upper surface of the card body;
**characterised in that** the fingerprint module (2) comprises a flexible substrate (22) comprising a microcontroller (23) arranged below the substrate and an active part (21) designated capture part on which the user will position their finger in order for the image of their fingerprint to be acquired, said active part being flush with the upper surface of the card body.

2. Electronic card according to claim 1, in which the fingerprint module (2) further comprises connection pads intended to connect said fingerprint module to an antenna (30) or to a second module (3).

3. Electronic card according to one of the preceding claims, in which the cavity (19, 19') has a maximum depth such that the distance between the lower surface of the card body and the bottom of the cavity is greater than or equal to 160 µm.

4. Electronic card according to one of the preceding claims, in which the cavity (19, 19') has a three-dimensional internal profile so as to follow the internal relief of the fingerprint module (2), the cavity comprising at least one stop configured to limit deformations of the module housed in the cavity.

5. Electronic card according to one of the preceding claims, comprising two cavities (19, 19'), one cavity housing the fingerprint module, the other cavity housing a second module (3), typically bank or access.

6. Electronic card according to one of the preceding claims, in which the card body (1) comprises an intermediate layer, designated interconnection layer, made of conductor material on which an antenna is integrated.

7. Electronic card according to claim 5, in which the card body (1) comprises an intermediate layer, designated interconnection layer, made of semiconductor material on which a circuit, configured to connect the fingerprint module to the second module (3) .

8. Electronic card according to the preceding claim, comprising hollowing-outs formed from the at least one cavity to the interconnection layer.

9. Electronic card according to claims 1 to 8, in which the card body comprises from the upper surface to the lower surface the following laminated layers:
- a transparent protective upper layer (13);
- a first substrate (14) made of PVC;
- the intermediate layer (15), designated interconnection layer;
- a second substrate (16) made of PVC;
- a transparent protective lower layer (17).

10. Electronic card according to one of the preceding claims, further comprising a tactile mark (4) and/or an alignment mark (5) arranged on the upper surface of the card body near to the fingerprint module (2), said tactile mark being configured to enable correct positioning of a finger on the fingerprint module (2).

11. Method of manufacturing an electronic card according to one of the preceding claims, comprising steps of:
- obtaining (100) a card body comprising an upper surface and a lower surface;
- forming (300) at least one cavity (19, 19') in said card body emerging from the upper surface;
- placing (400) a fingerprint module (2) in the cavity, the fingerprint module is flush with the upper surface of the card body;
the fingerprint module (2) comprising a flexible substrate (22) comprising an active part (21) designated capture part flush with the upper surface of the card body and a microcontroller (23) arranged below the substrate.

12. Manufacturing method according to claim 11, in which the step of obtaining the card body comprises a sub-step (110) of integrating an antenna on the intermediate layer (15).

13. Manufacturing method according to one of claims 11 or 12, comprising obtaining (200) two cavities in the card body (1), and placing (400) the fingerprint module in one of the two cavities and placing a second module (3) in the other cavity, the step of obtaining (100) the card body (1) further comprises a step of integrating (110') a connection circuit (40) configured to connect the fingerprint module (2) to the second module (3).

14. Manufacturing method according to one of claims 11 to 13, in which the step (100) of obtaining the card body (1) comprises a sub-step (110) of hot lamination of the upper layer (13), the first substrate (14), the intermediate layer (15) and the lower layer (17) .

15. Manufacturing method according to one of claims 11 to 14, comprising a step (200) of obtaining at least one hollowing-out in the card body from the cavity to the intermediate layer.
